# DEMANDE DE BREVET EUROPEEN

(11) **EP 1 039 198 A1**
(43) Date de publication de la demande: **27.09.2000**
(21) Numéro de dépôt: 00870050.2
(22) Date de dépôt: 20.03.2000
(51) Int. Cl.: F16L 3/26, H02G 3/04

(54) **Elément de fixation pour une gouttière en treillis**

(30) Priorité: 19.03.1999 FR 9903431
(71) Demandeur: Vergokan, 9700 Oudenaarde (BE)
(72) Inventeur: Verle, M. Ludwig, 9660 Brakel (BE)
(74) Mandataire: Luys, Marie-José A.H.

(57) **Abrégé**

L'invention concerne un élément de fixation pour en treillis constituée de fils longitudinaux et transversaux, la gouttière reposant, lorsqu'elle est montée, sur des consoles (13), présentant une série d'orifices (8), caractérisé en ce qu'il est constitué d'un clip formé de deux ailes (10) disposées en V, calibrées pour être enfoncées dans l'un des orifices (8) précités et réalisées à partir d'une pièce de métal ou d'une matière présentant une élasticité analogue, chaque aile (10) du clip étant prolongée par une lamelle (11) qui est profilée de telle sorte dans le sens transversal qu'elles agrippent chacune, d'une part, un fil de la gouttière et, d'autre part, un rebord de l'orifice (8) dans lequel l'élément a été enfoncé.

## Description

La présente invention se rapporte à un élément de fixation pour une gouttière en treillis, ci-après dénommé "gouttière" constituée de fils longitudinaux et transversaux qui forment des parois latérales et une base destinée à supporter des câbles électriques ou téléphoniques ou des tuyaux, la base de la gouttière reposant, lorsqu'elle est montée, sur des consoles présentant une série d'orifices.

Les gouttières en treillis auxquelles s'applique l'invention sont d'un type connu et reposent en position d'utilisation sur des consoles qui sont fixés à un mur, une paroi ou une surface analogue. Il est également possible de faire appel à divers moyens de suspension à un plafond tel que des pendards, dans lesquels sont intégrées les consoles ou leur équivalent technique. La fixation des gouttières se fait par divers moyens parmi lesquels il faut noter, les vis-et-écrous, les boulons, les moyens d'agrafages ainsi que divers moyens pouvant nécessiter l'usage d'un outil.

L'invention a pour but de réaliser un élément qui non seulement permet de solidariser à la main une gouttière de sa console mais garantit une très grande flexibilité en ce sens qu'en une seule opération manuelle un fil de la gouttière peut être immobilisé sur une console en tenant uniquement compte du sens dans lequel s'étendent les orifices prévus dans la console. Une console d'un type approprié peut être constitué d'un profilé qui, en position d' utilisation, peut s'étendre horizontalement ou verticalement.

Pour réaliser l'objectif de l'invention, l'élément de fixation est caractérisé en ce qu'il est constitué d'un clip formé de deux ailes disposées en V, calibrées pour être enfoncées dans l'un des orifices précités et réalisées à partir d'une pièce de métal ou d'une matière présentant une élasticité analogue, chaque aile du clip étant prolongée de telle sorte et sous un angle par une lamelle qui est profilée de telle sorte dans le sens transversal qu'elles agrippent chacune, d'une part, un fil de la gouttière et, d'autre part, un rebord de l'orifice dans lequel l'élément a été enfoncé.

Toujours selon l'invention, chaque aile présente, à l'endroit où elle se transforme en une lamelle précitée, un creux permettant d'agripper le rebord d'un orifice.

D'autres détails et avantages de l'invention ressortiront de la description qui sera donnée ci-après d'un élément de fixation pour une gouttière en treillis destinée à supporter des câbles électriques ou téléphoniques, des tuyaux et analogues.

Cette description n'est donnée qu'à titre d'exemple et ne limite pas l'invention. Les notations de référence se rapportent aux figures ci-jointes.
La figure 1 est une vue en perspective d'une partie d'une gouttière fixée sur une console à l'aide d'éléments selon l'invention.
La figure 2 montre à une plus grande échelle et en perspective un élément de fixation selon l'invention.

L'élément de fixation représenté aux figures et désigné par la référence 1 est réalisé à partir de métal mais il doit être entendu que toute matière offrant une résistance suffisante et, an particulier, une élasticité comparable à celle du métal pourrait trouver application.

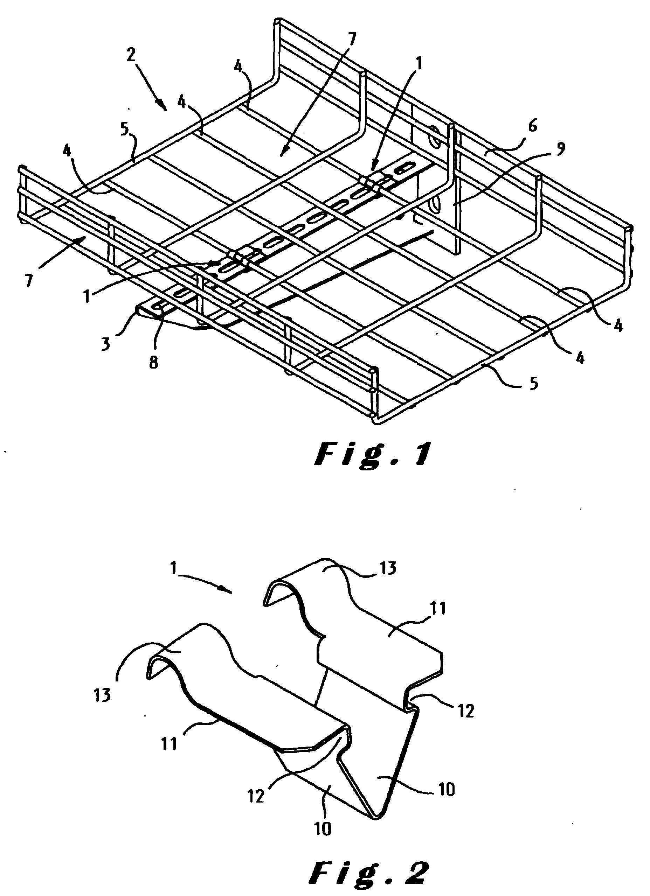

L'élément de fixation est conçu pour immobiliser une gouttière an treillis 2 sur une console 3. La gouttière an treillis comporte, de façon connue on soi des fils longitudinaux 4 et transversaux 5 soudés entre eux. Les fils donnent naissance à des parois latérales 6 et une base 7. Ce sont donc en pratique les fils longitudinaux 4 qui seront immobilisés sur la console 3 dont l'aile supérieure et généralement horizontale (à tout le moins dans la position d'utilisation représentée à la figure 1) présente une succession d'orifices 8. La fixation de la console 3 sur un mur, une paroi ou toute autre surface peut se faire an utilisant l'extrémité repliée 9 de la console. Ces détails ne font pas partie de l'invention.

De même il est évident que les orifices 8 pourraient avoir toute forme géométrique.

L'élément de fixation en forme de clip, selon l'invention, comprend deux ailes 10 an forme de V qui sont profilées pour permettre un enfoncement aisé de ces ailes dans un orifice 8 qui est sélectionné en vue de la fixation de la gouttière. La matière dont est constitué l'élément de fixation 1 doit présenter suffisamment d'élasticité pour que les ailes 2 puissent glisser aisément dans l'orifice 8 et reprendre ensuite leur position de départ et demeurer retenues dans la console. Chaque aile se prolonge latéralement pour former chaque fois une lamelle 11. Entre une lamelle 11 et l'aile 10 correspondante est prévu un creux 12 destiné à agripper le rebord d'un orifice 8 de la console 3. L'extrémité libre d'une lamelle 11 se termine par un arrondi 13 destiné à emprisonner un fil 4 de la gouttière 2. A ce stade, l'élément de fixation 1 étant enfoncé au maximum dans un orifice 8 de la console 3 on peut considérer que la gouttière est parfaitement solidarisée de la console 3. Le nombre d'éléments de fixation à utiliser entre deux fils transversaux 5 ou longitudinaux 4 est de toute évidence facultatif.

Il doit expressément être entendu que dans une gouttière en treillis du type décrit les fils pourraient présenter toute section autre qu'une section cylindrique. Les fils pourraient prendre la forme d'un profilé quelconque.

De la description qui vient d'être donnée d'un élément de fixation selon l'invention, il apparaît clairement que celui-ci peut aisément être introduit à la main et être retiré de la même manière. L'élément de fixation selon l'invention permet donc une considérable augmentation du rythme de montage et de démontage de gouttières en treillis ou de structures analogues.

## Revendications

1. Elément de fixation pour une gouttière en treillis ci-après dénommé gouttière, constituée de fils longitudinaux (4) et transversaux (5) qui forment des parois latérales (6) et une base (7) destinée à supporter des câbles électriques ou téléphoniques ou des tuyaux, la base de la gouttière reposant, lorsqu'elle est montée, sur des consoles (3), présentant une série d'orifices (8), caractérisé en ce qu'il est constitué d'un clip formé de deux ailes disposées on V, calibrées pour être enfoncées dans l'un des orifices (8) précités et réalisées à partir d'une pièce de métal ou d'une matière présentant une élasticité analogue, chaque aile du clip étant prolongée de telle sorte et sous un angle par une lamelle qui est profilée de telle sorte dans le sens transversal qu'elles agrippent chacune, d'une part, un fil de la gouttière et, d'autre part, un rebord de l'orifice (8) dans lequel l'élément a été enfoncé.

2. Elément de fixation selon la revendication 1, caractérisé on ce que chaque aile (10) du clip présente, à l'endroit où elle se transforme en une lamelle précitée 11), un creux (12) permettant d'agripper le rebord d'un orifice (8):

3. Elément de fixation selon l'une des revendications 1 et 2, caractérisé on ce que chacune des lamelles précitées (11) se termine par un arrondi (13) profilé de manière à agripper le fil par rapport auquel la console (3) doit être solidarisé.
